# EUROPEAN PATENT SPECIFICATION

(11) **EP 0 538 813 B1**
(45) Date of publication and mention of the grant of the patent: **08.06.2005**
(21) Application number: 92117982.6
(22) Date of filing: 21.10.1992
(51) Int. Cl.: G06K 7/10, G06K 19/14, G06K 19/16, G06K 7/12

(54) **Optical head for an authenticity identifying system**
Optischer Kopf für ein Echtheits-Identifizierungssystem
Tête optique pour système d'identification d'authenticité

(30) Priority: 24.10.1991 US 782976
(43) Date of publication of application: 28.04.1993
(73) Proprietor: NHK SPRING CO.LTD., Yokohama-shi, Kanagawa-ken (JP)
(72) Inventor: Nishiguma, Hiroaki, c/o NHK Spring Co., Ltd., Yokohama-shi, Kanagawa-ken (JP); Hoshino, Hidekazu, c/o NHK Spring Co., Ltd., Yokohama-shi, Kanagawa-ken (JP); Seki, Yoshiaki, c/o NHK Spring Co., Ltd., Yokohama-shi, Kanagawa-ken (JP)
(74) Representative: Dr. Weitzel & Partner

(56) References cited:
- EP-A- 0 412 316
- DE-A- 2 444 961

## Description

### TECHNICAL FIELD

The present invention relates to a system for determining or identifying the authenticity of such articles as information storage cards by means of a reader/writer to prevent unauthorized fabrication and alteration of such articles or cards, and in particular to an optical head which is suitable for use in such a system. The information storage cards include, not exclusively, magnetic cards, IC cards, optical cards and so on which are capable of exchanging information with reader/writers.

### BACKGROUND OF THE INVENTION

Conventionally, to the end of preventing the forgery of, for instance, a magnetic card, it has been practiced to use a laminated structure for its magnetic layer, and to punch holes in the magnetic card when the magnetic card is not intended for repeated use. However, such structures can be duplicated with deceitful intention by the forgers with relative ease, and may not be sufficient to discourage attempts to illegally duplicate and alter the card. The internal structure of the card may be made more complex by known means, but it will lead to the complication and cost increase of the reader/writers for reading and writing information into and out of the card. A holograph or other optically conditioned region having a prescribed directivity may be used for identification purpose, but the system for optically identifying it tends to be complex, expensive and large in size.

DE-A-24 44 961 discloses a character recognition system which employs an optical head having a plurality of light receiving sectors arranged concentrically. The light emitting element is not shown in the drawings. It simply and generally illuminates the document to be read. Further, the said document suggests the use of a single wafer including an array of photo-diodes. It does, however, not suggest any opening in the wafer for defining an aperture for the light emitting element. Also, the said document does not suggest the use of a hologram.

It is the object of the invention to provide an optical head for optically determining authenticity of an article by impinging a light beam upon an identification region provided on the article and having a selected reflective directivity, and receiving light reflected by the identification region, which is highly compact in structure.

A further object is to provide such an optical head which is economical to manufacture.

These and other objects of the present invention can be accomplished by the teaching of claim 1.

### BRIEF DESCRIPTION OF THE DRAWINGS

Now the present invention is described in the following with reference to the appended drawings, in which:
Figure 1 is a perspective view of a card and an essential part of a card reader/writer to which the present invention is applied;
Figures 2 is a sectional view of the optical head according to the present invention taken along line II-II of Figure 1; and
Figure 3 is a bottom view of the optical head as seen in the direction indicated by III in Figure 2.

### DETAILED DESCRIPTION OF THE PREFERRED EMBODIMENTS

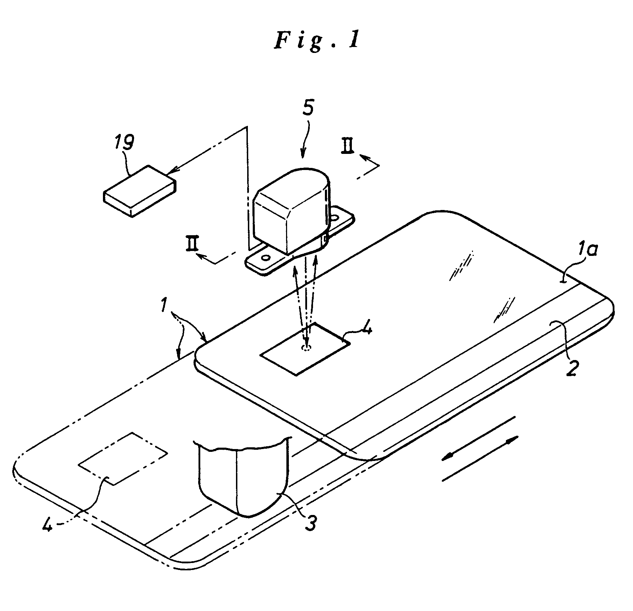

Figure 1 shows a card reader/writer to which a preferred embodiment of the present invention is applied. The card 1 is conveyed in the direction indicated by the arrows or substantially laterally as seen in Figure 1 by means of conveyer rollers or the like not shown in the drawing, and a magnetic head 3 writes into and reads out of a magnetic stripe 2 provided on a major surface 1a of the card 1 when it has reached such a position.

A holograph region 4 is provided on a suitable location of the major surface 1a of the card 1. This holograph region 4 consists of a reflective holograph having such a reflective property that incident light having a certain wave length and projected perpendicularly upon the holograph is reflected in a certain prescribed direction or certain prescribed directions. The identification region may consist of a holograph, a diffraction grating or a multiplicity of parallel grooves.

The reader/writer is provided with an optical head 5 according to the present invention for projecting a coherent beam of laser light perpendicularly upon the major surface 1a of the card 1, in particular upon the holograph region 4, and receiving the light reflected therefrom as described hereinafter. An identification circuit 19 is connected to the optical head 5 to determine the authenticity of each card.

In carrying out such a card identification process, the card 1 inserted in the card reader/writer is retained perpendicularly to the illuminating light beam from the optical head 5, and the illuminating light or the incident light from the optical head 5 is projected upon the holograph region 4. The authenticity of the card 1 can be identified when the light reflected by the holograph region 4 is collected by the optical head 5 in a certain pattern, and its intensity is detected to be of a certain level by the identification circuit 19. Therefore, even when a forger obtained such a card, not only it would be difficult for him to analyze and duplicate the holograph but also a significant cost is required to fabricate an identical holograph. Thereby, it offers a strong discouraging effect upon potential forgers.

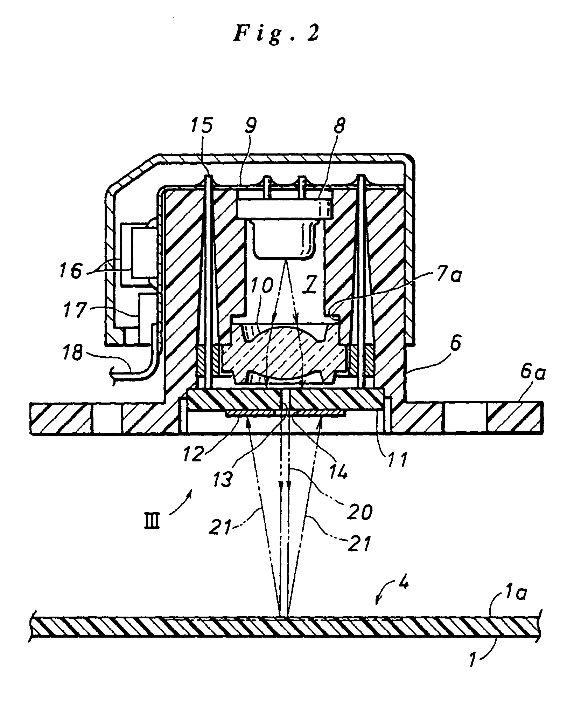

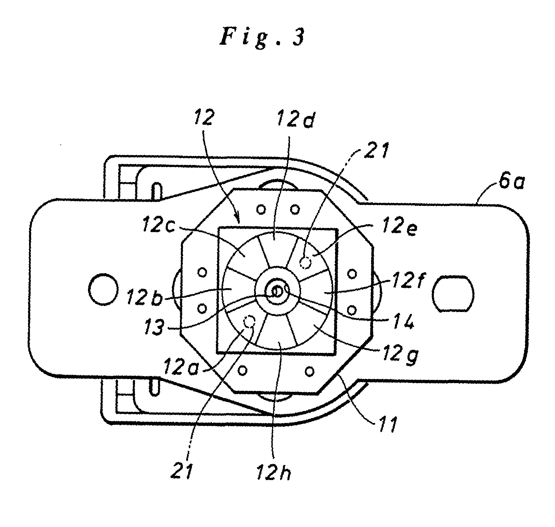

Figures 2 and 3 show the preferred embodiment of the optical head according to the present invention. This optical head 5 comprises an annular casing 6 made of synthetic resin and provided with a flange 6a at a bottom end thereof, a light emitting element 8 consisting of a semiconductor laser device at a top end of a central bore 7 defined in the casing 6, and a lens 8 fixedly fitted into an enlarged part 7a of the central bore 7 in a lower part thereof.

The bottom end (the lower end as seen in Figure 2) of the central bore 7 is closed by a circuit board 11 having an octagonal shape as illustrated in Figure 3. A semiconductor chip 12 consisting of a silicon chip is mounted on the bottom surface of the circuit board 11. The circuit board 11 is provided with a central opening 13 for allowing a coherent light beam emitted from the light emitting element 8 and collimated by the lens 10 to pass through. The central opening 13 of the circuit board 11 serves as a diaphragm which limits the aperture of the lens 10.

The semiconductor chip 12 is divided into eight sectors 12a through 12h of an equal size, and is provided with a central opening 14 which is coaxial with the opening 13 of the circuit board 11 and is larger in diameter than the opening 13. Each of the sectors 12a through 12h is formed as an individual photodiode. The identification of the identification region can be accomplished by detecting the pattern of light received by these sectors. The opening 13 or the central aperture serves as a diaphragm.

A flexible circuit board 9 is attached to an axial upper end surface of the casing 6 remote from the flange 6a, and a part of the flexible circuit board 9 extends along a side of the casing 6. Pins 15 connected to the sectors 12a through 12h of the semiconductor chip 12 along with pins extending from the light emitting element 8 are soldered to appropriate parts of the flexible circuit board 9. The flexible circuit board 9 carries various circuit elements 16, and lead wires 18 are connected to appropriate parts of the circuit formed on the flexible circuit board 9 via a connector 17.

According to the present invention, the light receiving surface may be simply divided into a plurality of sectors 12a through 12h arranged around the central opening 14 as illustrated in Figure 3, or, alternatively, may be divided into two or more rows of sectors arranged around the central opening 14.

## Claims

1. An optical head (5) for optically determining the authenticity of an article (1) by impinging a light beam upon an identification region (4) provided on said article (1) and having a selected reflective directivity, and receiving light reflected by said identification region, comprising:
- a light emitting element (8) for providing a coherent beam of light
- a generally planar mounting means (11);
- a generally planar array of photodiodes (12) mounted on said mounting means (11) whereby said photodiodes do not receive direct light from said light emitting element, said array of photodiodes (12) being arranged around an axial centre line of said coherent light beam, each of said photodiodes (12a -12h) being adapted to individually detect a magnitude of light reflected from said identification region (4) of said article(1) and impinged thereon,
**characterized in that**
- the optical head further comprises an annular casing (6) defining a central bore (7) therein;
- said light emitting element is received coaxially at one end of said central bore (7) with a light emitting surface thereof facing interior of said central bore;
- said mounting means (11) is provided at an other end of said central bore (7) remote from said one end and includes an opening (13), disposed in a light path of said coherent light beam for allowing said coherent light beam to pass there through;
- said generally planar array of photodiodes is mounted on a surface of said mounting means facing away from said light emitting element (8) and is arranged around said opening (13).

2. An optical head according to claim 1, wherein said planar array of photodiodes consists of a concentric array of photodiodes each having a sector-shaped light receiving surface.

3. An optical head according to claim 2, wherein said sector-shaped light receiving surfaces are arranged in two rows around said aperture.

4. An optical head according to claim 1, further comprising a circuit board (9) attached to said one end of said annular casing, said light emitting elements being mounted on said circuit board via leads of said light emitting element, said light receiving elements being provided with leads (15) which are passed through the annular casing and electrically and mechanical connected to said circuit board.

5. An optical head according to claim 4, wherein said circuit board consists of a flexible circuit board, and is provided with an extension extending along a side of said annular casing and carrying at least one circuit element (16) for said light emitting element or said light receiving element.

6. An optical head according to claim 1, wherein said array of photodiodes consisting of a single wafer having a central opening (14) passed through said wafer, and said sectors defined around said central opening.

7. An optical head according to claim 1, wherein said light emitting element consists of a semiconductor laser device.

8. An optical head according to claim 1, wherein said identification region consists of a holograph, a diffraction grating or a multiplicity of parallel grooves.

## Patentansprüche

1. Ein optischer Kopf (5) zum optischen Bestimmen der Authentizität eines Gegenstandes (1), durch Beaufschlagen eines Lichtstrahls auf einen ldentifikationsbereich (4), der auf dem gesagten Gegenstand (1) vorgesehen ist und welcher eine ausgewählte reflektive Richtcharakteristik aufweist, und das Empfangen von Licht, welches durch den gesagten Identifikationsbereich reflektiert wird, umfassend:
- ein lichtemittierendes Element (8) zum zur Verfügung Stellen eines kohärenten Lichtstrahls;
- ein im wesentlichen ebenes Montagemittel (11),
- ein im wesentlichen ebenes Feld von Photodioden (12), welche auf dem gesagten Montagemittel (11) montiert sind, wobei die gesagten Photodioden kein Licht direkt aus dem gesagten lichtemittierenden Element aufnehmen, das gesagte Feld von Photodioden (12) um eine axiale Mittellinie des gesagten kohärenten Lichtstrahls herum angeordnet sind, jede der gesagten Photodioden (12a - 12h) angepasst ist, um individuell eine Stärke von Licht, welches von dem gesagten Identifikationsbereich (4) des gesagten Gegenstands (1) reflektiert wird und auf diese beaufschlagt wird, zu detektieren,
**dadurch gekennzeichnet, dass**
- der optische Kopf ferner ein ringförmiges Gehäuse (6) umfasst, welches eine zentrale Bohrung (7) in sich ausbildet;
- das gesagte lichtemittierende Element koaxial an einem Ende der gesagten zentralen Bohrung (7) aufgenommen wird, wobei eine lichtemittierende Oberfläche desselben dem Innenraum der gesagten zentralen Bohrung gegenübersteht;
- das gesagte Montagemittel (11) an einem anderen Ende der gesagten zentralen Bohrung (7) entfernt von dem gesagten einen Ende vorgesehen ist und eine Öffnung (13) umfasst, die in einem Lichtweg des gesagten kohärenten Lichtstrahls angeordnet ist, um zu ermöglichen, dass der gesagte kohärente Lichtstrahl durch diese hindurchtritt;
- das gesagte im wesentlichen ebene Feld von Photodioden auf einer Oberfläche des gesagten Montagemittels montiert ist, welche von dem gesagten lichtemittierenden Element (8) abgewandt ist und um die gesagte Öffnung (13) herum angeordnet ist.

2. Ein optischer Kopf gemäß Anspruch 1, wobei das gesagte ebene Feld von Photodioden aus einem konzentrischen Feld von Photodioden besteht, von denen jede eine sektorförmige lichtaufnehmende Oberfläche aufweist.

3. Ein optischer Kopf gemäß Anspruch 2, wobei die gesagten sektorförmigen lichtaufnehmenden Oberflächen in zwei Reihen um die gesagte Öffnung herum angeordnet sind.

4. Ein optischer Kopf gemäß Anspruch 1, ferner umfassend eine Schaltkarte (9), die an einem Ende des gesagten ringförmigen Gehäuses angeschlossen ist, wobei die gesagten lichtemittierenden Elemente auf der gesagten Schaltkarte über Leitungen der gesagten lichtemittierenden Elemente montiert sind, die gesagten lichtaufnehmenden Elemente mit Leitungen (15) versehen sind, welche durch das ringförmige Gehäuse hindurchgeführt sind und elektrisch und mechanisch mit der gesagten Schaltkarte verbunden sind.

5. Ein optischer Kopf gemäß Anspruch 4, wobei die gesagte Schaltkarte aus einer flexiblen Schaltkarte besteht und mit einer Verlängerung versehen ist, die sich entlang einer Seite des gesagten ringförmigen Gehäuses erstreckt und wenigstens ein Schaltelement (16) für das gesagte lichtemittierende Element oder das gesagte lichtaufnehmende Element trägt.

6. Ein optischer Kopf gemäß Anspruch 1, wobei das gesagte Feld von Photodioden aus einem einzigen Wafer besteht, welcher eine zentrale Öffnung (14) aufweist, die durch den gesagten Wafer durchgeführt ist, und die gesagten Sektoren um die gesagte zentrale Öffnung herum ausgebildet sind.

7. Ein optischer Kopf gemäß Anspruch 1, wobei das gesagte lichtemittierende Element aus einer Halbleiterlasereinrichtung besteht.

8. Ein optischer Kopf gemäß Anspruch 1, wobei der gesagte Identifikationsbereich aus einem Hologramm, einem Beugungsgitter oder einer Vielfalt von parallelen Kerben besteht.

## Revendications

1. Tête optique (5) pour déterminer optiquement l'authenticité d'un article (1 ) en dirigeant un rayon lumineux sur une zone d'identification (4) prévue sur ledit article (1 ) et ayant une directivité réflective sélectionnée, et en recevant la lumière réfléchie par ladite zone d'identification, comprenant :
- un élément émetteur de lumière (8) pour fournir un rayon de lumière cohérent
- un moyen de montage généralement plan (11) ;
- un réseau de photodiodes généralement plan (12) monté sur ledit moyen de montage (11), grâce à quoi lesdites photodiodes ne reçoivent pas de lumière directe dudit élément émetteur de lumière, ledit réseau de photodiodes (12) étant agencé autour d'une ligne centrale axiale dudit rayon lumineux cohérent, chacune desdites photodiodes (12a - 12h) étant adaptée pour détecter individuellement une quantité de lumière réfléchie par ladite zone d'identification (4) dudit article (1) et dirigée sur elle,
**caractérisée en ce que**
- la tête optique comprend en outre un boîtier annulaire (6) à l'intérieur duquel est défini un alésage central (7) ;
- ledit élément émetteur de lumière est reçu coaxialement à une extrémité dudit alésage central (7), une surface émettant la lumière dudit élément étant dirigée vers l'intérieur dudit alésage central ;
- ledit moyen de montage (11 ) est prévu à une autre extrémité dudit alésage central (7) distant de ladite première extrémité et comprend une ouverture (13) disposée dans une raie spectrale dudit rayon de lumière cohérent pour permettre audit rayon de lumière cohérent de passer au travers ;
- ledit réseau de photodiodes généralement plan est monté sur une surface dudit moyen de montage éloignée dudit élément émetteur de lumière (8) et est disposé autour de ladite ouverture (13).

2. Tête optique selon la revendication 1, dans laquelle ledit réseau plan de photodiodes est constitué d'un réseau concentrique de photodiodes ayant chacune une surface recevant la lumière en forme de secteur.

3. Tête optique selon la revendication 2, dans laquelle lesdites surfaces recevant la lumière en forme de secteur sont disposées en deux rangées autour de ladite ouverture.

4. Tête optique selon la revendication 1, comprenant en outre une carte de circuit (9) fixée à ladite première extrémité dudit boîtier annulaire, lesdits éléments émetteurs de lumière étant montés sur ladite carte de circuit par l'intermédiaire des fils dudit élément émetteur de lumière, lesdits éléments recevant la lumière étant munis de fils (15) qui traversent le boîtier annulaire et sont connectés électriquement et mécaniquement à ladite carte de circuit.

5. Tête optique selon la revendication 4, dans laquelle ladite carte de circuit est constituée d'une carte de circuit flexible, et est munie d'un prolongement s'étendant le long d'un côté dudit boîtier annulaire et portant au moins un élément de circuit (16) pour ledit élément émetteur de lumière ou ledit élément recevant la lumière.

6. Tête optique selon la revendication 1, dans laquelle ledit réseau de photodiodes est constitué d'une seule plaquette ayant une ouverture centrale (14) traversant ladite plaquette, et desdits secteurs définis autour de ladite ouverture.

7. Tête optique selon la revendication 1, dans laquelle ledit élément émetteur de lumière est constitué d'un dispositif laser à semi-conducteur.

8. Tête optique selon la revendication 1, dans laquelle ladite zone d'identification est constituée d'un hologramme, d'un réseau de diffraction ou d'une multiplicité de rainures parallèles.
